# EUROPEAN PATENT APPLICATION

(11) **EP 1 408 196 A2**
(43) Date of publication of application: **14.04.2004**
(21) Application number: 03256253.0
(22) Date of filing: 03.10.2003
(51) Int. Cl.: F01D 5/18, B26F 3/00, B24C 1/04, B26F 1/26

(54) **Method of forming cooling apertures in airfoil-shaped blades**

(30) Priority: 08.10.2002 US 265745
(71) Applicant: GENERAL ELECTRIC COMPANY, Schenectady, NY 12345 (US)
(72) Inventor: Gunn, George, Landrum South Carolina 29356 (US); Devine, Robert Henry, Simpsonville South Carolina 29680 (US)
(74) Representative: Pedder, James Cuthbert

(57) **Abstract**

Apertures (18, 20, 22) in airfoils (12) for use in a hot gas path of a turbine are formed from the interior of the airfoil to the exterior in circumstances where line-of-sight access from locations external to the nozzle is inhibited or prohibited. A water jet nozzle head (26) is disposed in a cavity within the airfoil and angled at the desired inclination to cut an angled hole (18) through the airfoil wall using a water jet and abrasive material contained in the water. A protective device, e.g., a backstop or shield (30), is provided on the outside of the nozzle to prevent damage to other portions of the nozzle from the water jet which would otherwise impinge but for the protective device.

## Description

The present invention relates to methods for forming cooling apertures in airfoils for disposition in the hot gas path of a turbine and particularly relates to methods utilizing water jets for forming angled cooling apertures through the wall of the airfoil from within the airfoil.

Film cooling of airfoils for use in the hot gas path of turbines requires the formation of cooling apertures through the walls of the airfoil. Higher gas turbine efficiencies and higher firing and operating temperatures have created a demand for film cooling schemes that can direct the cooling medium, e.g., air, to areas of the airfoils that are traditional hot spots or airfoil life-limiting regions. Traditional hot spots along the airfoil surfaces such as the leading edge and fillets, as well as along the trailing edge adjacent the fillets, can be cooled, provided the apertures are angled such that the hot spots are in the line-of-sight of the apertures. Thus, directed or angled cooling apertures are desirable for film cooling those regions.

Prior processes for forming cooling apertures in an airfoil have included the use of EDM disposed within the airfoil forming the apertures from the inside of the airfoil out. Water jets have been used to form cooling apertures, with the water jets being directed from the outside of the airfoil toward the interior of the airfoil. Sharply angled apertures, however, and particularly in the case of nozzles, have not previously been formed by water jets due to the physical limitations and configurations of the water jet equipment. That is, portions of the nozzle, for example, the inner and outer band portions interfere with the water jet equipment when attempting to form sharply angled apertures through the airfoil from outside of the nozzle. More particularly, the inner and outer band portions interfere with the positioning of the water jet equipment and preclude formation of the apertures from the outside to the inside of the nozzle using water jets. Accordingly, there is a need for a method of forming non-line-of-sight cooling apertures in airfoils for use in a turbine using water jet technology.

In accordance with a preferred embodiment of the present invention, there is provided a water jet nozzle head receivable through an opening through an end of the airfoil to position the nozzle within the airfoil such that the water jet emanating from the nozzle can form an angled aperture throughout the wall of the airfoil. Thus, to form an angled cooling aperture in a wall of an airfoil, the water jet nozzle head is disposed through the end opening into the interior cavity of the airfoil. The water jet is directed at an angle to form the angled aperture adjacent the opposite end of the airfoil. In the case of nozzles having inner and outer bands, the water jet nozzle head is positioned along the interior of the airfoil wall such that the water jet emanating from the nozzle head forms a non-line-of-sight intersection with one of the band portions of the nozzle. By non-line-of-sight is meant that, because of the physical limitations and configuration of water jet equipment and the configuration of the nozzle, a direct line-of-sight inclined aperture through the airfoil cannot be formed from outside the airfoil. To protect the nozzle band portion from being cut by the water jet forming and passing through the formed aperture, a protective device, e.g., a plate, is used as a backstop against which the water jet impinges.

The device therefore precludes cutting of the band portion on axis with the aperture by the water jet. To form inclined cooling film apertures adjacent opposite ends of the nozzle, the nozzle head is disposed through an end opening of the airfoil opposite from the end of the airfoil through which the aperture is to be formed. The nozzle head directs the water jet emanating from the water jet nozzle head to form an angled aperture along a non-line-of-sight direction intersecting a portion of the other nozzle band. A protective device is utilized to protect the other band portion from being cut by the water jet. Thus, by the present method, the inclined apertures through the airfoil wall may be formed utilizing water jet technology wherein the apertures do not have line-of-sight access externally of the airfoil.

In a preferred embodiment according to the present invention, there is provided a method of forming apertures in an airfoil for use in a turbine wherein the airfoil has walls defining an airfoil shape and an interior cavity accessible through an opening at one end of the airfoil, comprising the steps of disposing a water jet nozzle head through the one end opening to a location within the cavity of the airfoil and directing a water jet emanating from the nozzle head to cut one or more apertures through at least one wall of the airfoil.

In a further preferred embodiment according to the present invention, there is provided a method of forming apertures in a nozzle of a turbine having an airfoil wherein the airfoil has walls defining the airfoil shape, an interior cavity accessible through an opening at one end of the airfoil and inner and outer band portions extending laterally of the airfoil at opposite ends thereof, comprising the steps of disposing a water jet nozzle head through the one end opening to a location within the cavity of the airfoil and directing a water jet emanating from the nozzle head to form one or more apertures through at least one wall of the airfoil along a line-of-sight intersecting one of the band portions.

The invention will now be described in greater detail, by way of example, with reference to the drawings, in which:-
FIGURE 1 is a schematic perspective view of a nozzle for a turbine as viewed from the topside of the outer band illustrating a water jet nozzle head poised for disposition within the nozzle to form inclined cooling apertures in the nozzle airfoil;
FIGURE 2 is a perspective view of the nozzle as viewed from the underside of the inner band;
FIGURE 3 is a schematic representation of a water jet nozzle head within an airfoil illustrating the direction of flow of the water jet for forming the aperture, as well as a protective device for the inner band; and
FIGURE 4 is an enlarged schematic view illustrating the nozzle head forming an inclined aperture through a wall of the airfoil with the water jet impacting the protective device.

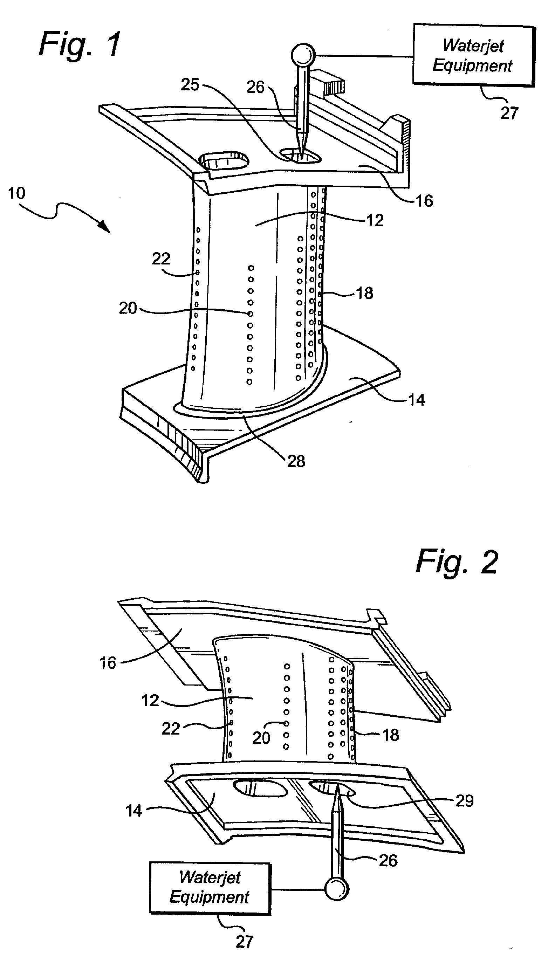

Referring now to the drawings, particularly to Figure 1, there is illustrated a nozzle, generally designated 10, for disposition within the hot gas path of a gas turbine. The nozzle 10 includes an airfoil 12 extending between inner and outer bands 14 and 16, respectively. It will be appreciated that nozzle 10 forms one of a plurality of nozzles in a circumferential array thereof for forming part of a stage of a turbine. As explained above, air film cooling of nozzles has previously been provided by the formation of a plurality of apertures or openings in the walls of the airfoil for directing cooling air flowing within the nozzle through the holes or apertures to cool the traditional hot spots of a nozzle.

As illustrated in Figure 1, a plurality of apertures 18, 20 and 22 are interspersed along the leading edge, the central portions of the sides of the airfoil and the trailing edge, respectively. It will be appreciated that, in use, certain of the apertures are angled to direct cooling air flow onto adjacent surfaces, for example, the inner or outer bands or the fillet regions of the nozzle. The angles of the apertures oftentimes preclude non-line-of-sight formation of the apertures by external equipment.

In accordance with a preferred embodiment of the present invention, there is provided a water jet equipment 27 having a water jet nozzle head 26 for reception within the interior of the nozzle 10 and specifically within the airfoil 12 of nozzle 10. The water jet equipment 27 may be of the type manufactured and sold by Huffman Corp., Clover, South Carolina. Basically, a conventional water jet provides a thin stream of water at high pressure, for example, in a range of 15,000 psi to 110,000 psi. For the present application, the water is mixed with an abrasive material, for example, garnet or aluminum oxide to facilitate cutting the metal walls of the airfoil.

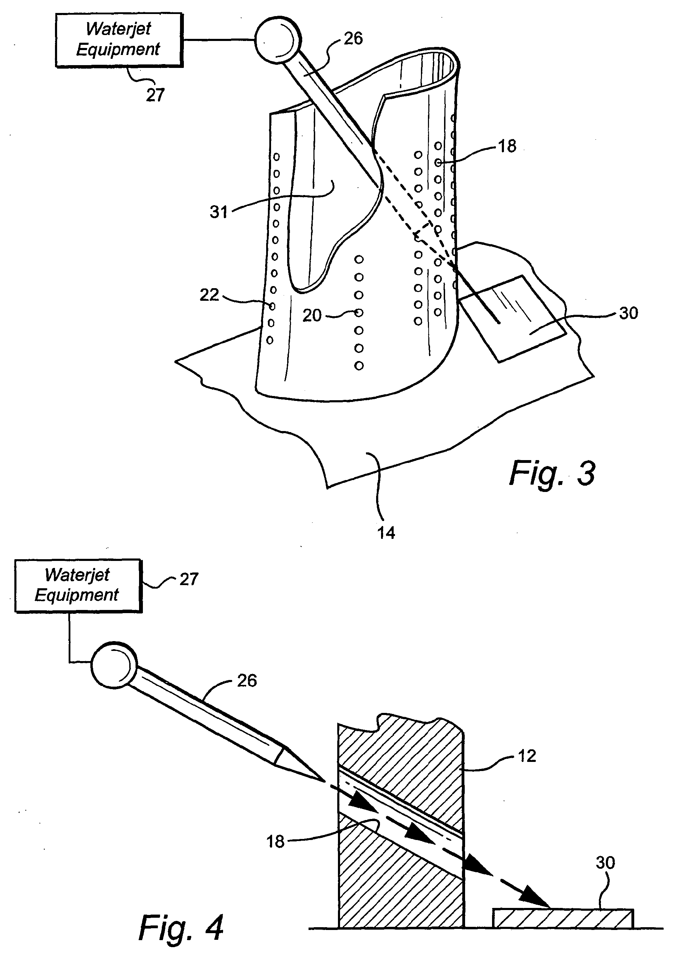

As illustrated in Figures 1 and 2, the nozzle 10 includes one or more openings 25 and 29 through the opposite ends, respectively, of the airfoil 12 through which cooling air is supplied and exhausted in use. The water jet nozzle head 26 may be disposed through one of these openings and received within an interior cavity 31 (Figure 3) of the airfoil. The nozzle head 26 is thus positioned for directing the water jet against the interior surface of the wall of the airfoil. The pressure of the water jet in conjunction with the abrasive material cuts the hole through the metal wall of the nozzle. As illustrated, a number of the apertures 18, 20 and 22 are preferably formed to direct cooling air jets onto other surfaces of the nozzle, for example, the inner and outer bands 14 and 16 and fillets 28. Consequently, the water jet must form the aperture to the appropriate angle to enable the cooling air to effectively cool the adjacent traditional hot spots of the nozzle. Because of the requirement for airflow onto or along these traditional hot spots, the apertures are angled. The angles of the apertures, however, are such as to not allow line-of-sight access to the airfoil 12 from the outside of the airfoil using traditional machining methods. By using a water jet having a water jet nozzle head disposed within the interior cavity of the airfoil, the apertures may be formed by cutting in non-line-of-sight directions, i.e., directions of the water jet which would intersect the surface intended to be cooled by cooling air flowing through the apertures. Thus, the nozzle head may be directed from the interior of the nozzle along a non-line-of-sight direction to form the angled apertures.

To prevent the water jet from damaging or destroying portions of the nozzle, e.g., the inner and outer bands directly in the line-of-sight of the water jet emanating from the nozzle head and through the formed aperture, a backstop or protective device 30 is deployed for protecting the portion of the nozzle which would otherwise be impacted by the water jet. As illustrated in Figures 3 and 4, the backstop 30 may comprise a protective plate temporarily secured to a portion of the nozzle, i.e., an outer or inner band, to receive, deflect and/or absorb the impact of the water jet once the water jet cuts through the wall of the nozzle forming the aperture at the required angle. The backstop 30 may be formed of a hard material such as carbide for durability and reuse. Alternatively, the backstop 30 may be formed of a metallic/plastic material for one-time usage or a material which will degrade over time and therefore have a predetermined number of uses. The backstop 30 may be shaped to pass about the nozzle and bands for temporary securement to the nozzle during the cutting of the apertures or may be clamped to the nozzle or to an ancillary fixture adjacent the nozzle. Various devices, e.g., backstops 30, may be used to slow the water jet. For example, a sleeve, not shown, may be disposed on a protective plate to dissipate a portion of the energy of the water jet before the water jet impacts the protective plate.

It will be appreciated that for small-diameter holes or apertures 18, 20 and 22, the water jet essentially blasts through the metal material of the wall. For larger-diameter holes or apertures, the water jet, after forming an initial opening, can be used to cut, i.e., circumscribe about a margin of the hole or aperture to enlarge the hole or aperture to the desired diameter or shape. Also, various configurations of apertures can be provided as desired. For example, the apertures may be circular, oval, round or cone-shaped or any other configuration within the capability of the water jet equipment.

For the sake of good order, various aspects of the invention are set out in the following clauses:-
1. A method of forming apertures (18, 20, 22) in an airfoil (12) for use in a turbine wherein the airfoil has walls defining an airfoil shape and an interior cavity accessible through an opening (25) at one end of the airfoil, comprising the steps of:
   disposing a water jet nozzle head (26) through the one end opening to a location within the cavity of the airfoil; and
   directing a water jet emanating from said nozzle head to cut one or more apertures (18, 20, 22) through at least one wall of the airfoil.
2. A method according to Clause 1 including directing the water jet against an interior wall portion of the airfoil to form the one or more apertures through the wall at an inclined angle relative to a surface of the airfoil.
3. A method according to Clause 1 wherein the airfoil cavity is accessible through an opening (29) at an opposite end of the airfoil, and including disposing the water jet nozzle head through the opposite end opening to a location within the cavity of the airfoil and directing the water jet to cut one or more additional apertures through a wall of the airfoil.
4. A method according to Clause 3 including directing the water jet against interior wall portions of the airfoil to form apertures through the wall at an inclined angle relative to a surface of the airfoil.
5. A method according to Clause 3 including directing the water jet emanating from the nozzle head disposed through the opening (25) at one end of the airfoil against an interior wall portion of the airfoil to form an aperture through the wall angled toward an opposite end of the airfoil and directing the water jet emanating from the nozzle head disposed through said opposite end opening (29) against a further interior wall portion of the airfoil to form an aperture through the wall angled toward said one end of the airfoil.
6. A method according to Clause 1 including directing the water jet to cut one or more apertures (18) along at least one side of the airfoil adjacent a leading edge thereof.
7. A method according to Clause 1 including directing the water jet to cut one or more apertures (22) along at least one side of the airfoil adjacent a trailing edge thereof.
8. A method according to Clause 1 including disposing a protective device (30) outside of the airfoil to provide a backstop for the water jet emerging through the formed aperture or apertures.
9. A method of forming apertures in a nozzle of a turbine having an airfoil wherein the airfoil has walls defining the airfoil shape, an interior cavity (31) accessible through an opening at one end of the airfoil and inner and outer band portions (14, 16) extending laterally of the airfoil at opposite ends thereof, comprising the steps of:
   disposing a water jet nozzle head (26) through the one end opening to a location within the cavity of the airfoil; and
   directing a water jet emanating from the nozzle head to form one or more apertures (18, 20, 22) through at least one wall of the airfoil along a line-of-sight intersecting one of the band portions.
10. A method according to Clause 9 including directing the water jet against an interior wall portion of the airfoil to form the one or more apertures through the wall at an inclined angle relative to a surface of the airfoil and toward an end of the airfoil and one of the band portions.
11. A method according to Clause 9 wherein the airfoil has an interior cavity (31) accessible through an opening (29) at an opposite end of the airfoil and including disposing the water jet nozzle head through the opposite end opening to a location within the cavity of the airfoil and directing the water jet to cut one or more additional apertures through a wall of the airfoil along a line-of-sight intersecting one of the band portions.
12. A method according to Clause 11 including directing the water jet against interior wall portions of the airfoil to form apertures angled toward at least one end of the airfoil along a line-of-sight intersecting a band portion.
13. A method according to Clause 11 including directing the water jet emanating from the nozzle head (26) disposed through said one end (25) opening against an interior wall portion of the airfoil to form an aperture through the wall portion angled toward an opposite end (29) of the airfoil and band portion and directing the water jet emanating from the nozzle head disposed through said opposite end opening against a further interior wall portion of the airfoil to form an aperture through the wall angled toward one end of the airfoil and the opposite band portion.
14. A method according to Clause 9 including directing the water jet to cut one or more apertures (18) along at least one side of the airfoil adjacent a leading edge thereof.
15. A method according to Clause 9 including directing the water jet to cut one or more apertures (22) along at least one side of the airfoil adjacent a trailing edge thereof.
16. A method according to Clause 9 including disposing a protective device (30) outside of the nozzle and between an aperture being formed through the airfoil wall portion and one of said bands to provide a backstop for the water jet emerging through a formed aperture.
17. A method according to Clause 16 including releasably securing the protective device to the nozzle.

## Claims

1. A method of forming apertures (18, 20, 22) in an airfoil (12) for use in a turbine wherein the airfoil has walls defining an airfoil shape and an interior cavity accessible through an opening (25) at one end of the airfoil, comprising the steps of:
disposing a water jet nozzle head (26) through the one end opening to a location within the cavity of the airfoil; and
directing a water jet emanating from said nozzle head to cut one or more apertures (18, 20, 22) through at least one wall of the airfoil.

2. A method according to Claim 1 including directing the water jet against an interior wall portion of the airfoil to form the one or more apertures through the wall at an inclined angle relative to a surface of the airfoil.

3. A method according to Claim 1 or 2 wherein the airfoil cavity is accessible through an opening (29) at an opposite end of the airfoil, and including disposing the water jet nozzle head through the opposite end opening to a location within the cavity of the airfoil and directing the water jet to cut one or more additional apertures through a wall of the airfoil.

4. A method according to Claim 3 including directing the water jet against interior wall portions of the airfoil to form apertures through the wall at an inclined angle relative to a surface of the airfoil.

5. A method according to Claim 3 including directing the water jet emanating from the nozzle head disposed through the opening (25) at one end of the airfoil against an interior wall portion of the airfoil to form an aperture through the wall angled toward an opposite end of the airfoil and directing the water jet emanating from the nozzle head disposed through said opposite end opening (29) against a further interior wall portion of the airfoil to form an aperture through the wall angled toward said one end of the airfoil.

6. A method according to Claim 1 including directing the water jet to cut one or more apertures (18) along at least one side of the airfoil adjacent a leading edge thereof.

7. A method according to Claim 1 including directing the water jet to cut one or more apertures (22) along at least one side of the airfoil adjacent a trailing edge thereof.

8. A method according to Claim 1 including disposing a protective device (30) outside of the airfoil to provide a backstop for the water jet emerging through the formed aperture or apertures.

9. A method of forming apertures in a nozzle of a turbine having an airfoil wherein the airfoil has walls defining the airfoil shape, an interior cavity (31) accessible through an opening at one end of the airfoil and inner and outer band portions (14, 16) extending laterally of the airfoil at opposite ends thereof, comprising the steps of:
disposing a water jet nozzle head (26) through the one end opening to a location within the cavity of the airfoil; and
directing a water jet emanating from the nozzle head to form one or more apertures (18, 20, 22) through at least one wall of the airfoil along a line-of-sight intersecting one of the band portions.

10. A method according to Claim 9 including directing the water jet emanating from the nozzle head (26) disposed through said one end (25) opening against an interior wall portion of the airfoil to form an aperture through the wall portion angled toward an opposite end (29) of the airfoil and band portion and directing the water jet emanating from the nozzle head disposed through said opposite end opening against a further interior wall portion of the airfoil to form an aperture through the wall angled toward one end of the airfoil and the opposite band portion.
